# EUROPEAN PATENT APPLICATION

(11) **EP 0 539 042 A1**
(43) Date of publication of application: **28.04.1993**
(21) Application number: 92308955.1
(22) Date of filing: 01.10.1992
(51) Int. Cl.: C08F 6/00, C09B 67/00, C09B 69/10, G01N 33/58

(54) **Method of purifying covalently bonded polymer-dye compounds**

(30) Priority: 22.10.1991 US 780799
(71) Applicant: PURITAN-BENNETT CORPORATION, Carlsbad, California 92009 (US)
(72) Inventor: Bankert, Charles S., Oceanside, California 92054 (US)
(74) Representative: Baverstock, Michael George Douglas

(57) **Abstract**

A method of purifying a polymer containing a covalently bound dye indicator and unbound dye indicator includes covalently bonding a dye indicator material to a polymer, placing the polymer-dye reaction mass within a filtration container formed of a semi-permeable membrane permeable to the dye indicator, and exposing the reaction mass in the container to a solvent to filter the polymer-dye compound. The concentration of the unbound indicator material in the filtrate may be monitored, and the solvent washes may be repeated to obtain the desired purity of the polymer-dye compound.

## Description

This invention relates generally to a method for purifying polymers, and more particularly concerns a method for purifying polymeric compounds formed from covalent bonding of a moiety with a polymer by removal of unbound moiety remaining in the polymer after the covalent bonding reaction for use in preparation of drift-free chemical sensors.

Optical fiber sensors for measuring acidity and dissolved gases of fluids have found numerous applications in the medical, chemical and environmental fields. Such sensors have been developed for taking in vivo, intravascular measurements of pH and other blood analytes, such as oxygen and carbon dioxide. An approach which has been widely used for such devices has involved fluorescence techniques utilizing dye indicators in a semipermeable matrix, due to the high sensitivity that can be achieved. However, impurities in the matrix material can cause problems of drift in measurements taken by such sensors.

Fluorescence techniques typically utilize a fluorescent dye whose fluorescence emissions are affected by the presence of the analyte of interest. The fluorescent dye is typically encapsulated or bound within a semi-permeable matrix commonly made from a polymer or similar substance. The dye matrix material can then be applied to the tip of an optical fiber using well-known techniques in the art. A light source with appropriate filtering system provides a selected wavelength of light which propagates down the optical fiber and excites the dye. The fluorescence signal, induced by the excitation energy, returns via an optical fiber to be measured by a photodetector. The intensity of the fluorescence of the dye, which is a function of the analyte level in the sample, can thus be transduced into a measure of the concentration of the analyte of interest. The intensity of response of the sensor is also a function of the amount of dye material in the surrounding matrix, so that variation of the dye content can alter the accuracy of such measurements.

A fluorescent indicator typically utilizes light in one wavelength region to excite the fluorescent indicator dye to emit light of a different wavelength. Such a sensor may for example utilize a single dye that exists in an acid form and a base form, each with a different emission wavelength. Changes in the pH or partial pressure of the carbon dioxide can thus cause the equilibrium between the two forms of the dye to change, thereby changing the ratio of the intensity of light emitted at the different wavelengths. Techniques implementing fluorescence quenching for measuring the partial pressure of oxygen have also been developed which utilize an oxygen-quenchable fluorescence dye. The intensity of the fluorescence of the dye, which is a function of the oxygen level in the sample and the quantity of dye in the matrix, can similarly be transduced into a partial pressure of oxygen.

Partial pressures of carbon dioxide in a solution can be determined by an optical sensor by measuring the pH of a solution of bicarbonate in equilibrium with the carbon dioxide in the solution. The bicarbonate and carbon dioxide form a pH buffer system in which the hydrogen ion concentration generally varies with the partial pressure of carbon dioxide. The pH or carbon dioxide content of a solution may, for example, be measured with a fiber optic sensor utilizing fluorescein as a fluorescence indicator enclosed in a silicone matrix at the end of an optical fiber. Carbon dioxide can permeate through this silicone matrix to the indicator substance. Another type of fluorescence indicator which has been used is hydroxypyrenetrisulfonic acid (HPTS). Unfortunately, such dyes as are unbound in the matrix can also permeate through this matrix as well, allowing the dye materials to leach out of the sensor over extended periods of time.

One approach to construction of an optical sensor to retain the dye material in the sensor has involved the application of sensing material directly to the tip of the optical fiber, or the attachment of a dye filled porous glass to the tip of the optical fiber, by an adhesive. Another approach has involved the attachment of a sleeve which contains the dye indicator sensing material immobilized in a hydrophilic polymeric matrix, such as by entrapment in the matrix or by ionic interactions with the matrix, over the tip of the optical fiber. Such sensors tend to eventually allow the indicator dye to leach out over extended time periods, resulting in increasingly inaccurate blood pH measurements. There remain many inherent problems associated with such optical fiber analyte sensors that can affect the accuracy of analyte measurements. For example, it is sometimes a difficult task to immobilize the fluorescent dye in a gas permeable matrix because of the chemical incompatibility between the dye and matrix. Many of the more widely used fluorescent dyes are polynuclear aromatic compounds which have low solubility in organic materials. As a result, the fluorescent dyes have a tendency to leach through the permeable matrix into the sample solution or gas mixture that is being tested.

Approaches for more effectively immobilizing an indicator dye for use in an operable sensor element such as absorbing the dye on inorganic or organic solid supports, dispersing the dye in the matrix by way of organic solvents, and covalently bonding the dye on porous glass have not been completely effective in avoiding the problem of leaching of the dye material. It has been found most effective to covalently bond the dye indicator substance to the polymer forming the matrix. However, unbound dye indicator impurities remaining in the polymeric matrix after covalent bonding can still leach out of the sensor, causing measurements taken with the sensor to drift. Even when the dye material is bonded to the sensor substance surface itself, it is difficult to insure that all of the dye material in the sensor is securely bound. As a result of the leaching of the dye during use, the sensing element may have to be continuously replaced to ensure the accuracy of analyte measurements. Moreover, unbound fluorescent dye molecules that are free to move within a polymer matrix tend to agglomerate, which results in changes in their fluorescent properties.

One method of purifying the polymer-dye material to reduce drift in a sensor involves conditioning the dye matrix material by exposing the material to a variety of acid and base buffer solutions to remove the unbound dye remaining in the polymer after bonding the dye material to the polymer. Another common method of conditioning such sensors to reduce the chemical changes which can occur within a sensor formed with polyacrylamide gel bound indicator dyes is by treatment of the dye-gel material with conditioning solutions which stabilize the pKa of the bound indicator. Another method of treating a hydrophilic acrylic dye/gel polymer to wash away weakly bonded dye molecules to reduce leaching of the dye involves treating the polymer-dye compound with an aqueous base at elevated temperatures to hydrolyze the dye/gel polymer and remove the weakly bonded dye molecules from the polymer, washing the base treated dye/gel polymer with water to remove the aqueous base, and treating the dye/gel polymer with an anhydrous solvent such as ethanol to remove water. However, sensors manufactured with such treated polymer-dye materials still frequently suffer from leaching of unbound dye from the polymeric sensing matrix, requiring frequent recalibration, which in a clinical situation is often impractical or impossible.

It would therefore be desirable to provide an improved method for purifying polymers containing a covalently bound fluorescent dye indicator material for preparation of a drift free sensor to stabilize measurements taken with such a sensor incorporating the polymer and the covalently bound dye material.

Briefly, and in general terms, the present invention provides for a method for purifying polymers covalently bound to a fluorescent dye indicator material to provide substantially drift free operation of sensors incorporating the polymer-dye compound, without post fabrication conditioning treatments.

The method for purifying a polymer containing unbound dye indicator material for reduction of drift in measurements made when the polymer-dye compound is used in a blood constituent sensor basically involves placing a polymer-dye compound formed by covalently bonding a polymer with a dye indicator material within a container formed of a semi-permeable membrane impermeable to the polymer-dye but permeable to the dye material, and exposing the polymer-dye in the container to a solvent to filter the polymer-dye compound. The solvent is preferably an organic solvent, and the filtrate is preferably removed and replaced with fresh wash solvent at least 3 or 4 times to purify the polymer-dye compound. The concentration of the unbound indicator material in the filtrate may also be monitored, and the solvent washes may be repeated until the concentration of the unbound indicator material in the filtrate is less than a predetermined threshold to obtain the desired purity of the polymer-dye compound.

The polymer-dye reaction mass is preferably formed from a mixture of a copolymer of hydroxyethyl methamethacrylate and aziridynyl ethyl methamethacrylate and a polyether polyisocyanate crosslinking agent, and the dye indicator material preferably consists essentially of 8-hydroxy-1, 3, 6 pyrenetrisulfonic acid. The semi-permeable membrane is also preferably permeable to molecules having a molecular weight less than about 12,000 to 14,000.

These and other aspects and advantages of the invention will become apparent from the following detailed description.

The use of intravascular blood analyte sensors utilizing fluorescent dyes covalently bound to a polymer matrix of the sensors has been limited by the problem of drift due to the gradual leaching of unbound dye indicator materials from the sensor over extended periods of time. Accordingly, the method of the invention contemplates the covalent bonding of a polymer with a moiety such as a dye indicator, and purification of the polymer-dye compound which contains unreacted, unbound dye indicator material remaining in the polymer after the bonding reaction.

One example of a polymer-dye compound used in sensitive blood analyte sensors in which the reduction of drift of measurements has been found to be closely related to the purity of the polymer-dye compound, and as to which the purification method of the invention may be used to advantage, is formed from a mixture of a copolymer of hydroxyethyl methamethacrylate (HEMA) and aziridynyl ethyl methamethacrylate (AEMA) having sites available for covalent bonding in a polyether polyamine form to one or more dye indicators, and a crosslinking agent which is a polyether polyisocyanate, such as that sold under the trademark "HYPOL" and made by W. R. Grace & Co.

The hydroxyethyl methamethacrylate (HEMA) and aziridynyl ethyl methamethacrylate (AEMA) are typically copolymerized in the ratio of 20:1 HEMA to AEMA. The polymerization may, for example, be run at 65 degrees C. for 20-40 minutes.

The dye indicator material, such as 8-hydroxy-1, 3, 6 pyrenetrisulfonic acid (HPTS) for example, is then attached to the HEMA/AEMA copolymer by first opening the aziridynyl ring using sodium carbonate followed by the addition of 8-acetoxy 1, 3, 6 pyrenetrisulfonyl chloride to covalently bond the dye to the HEMA/AEMA copolymer, forming HEMA/AEMA - HPTS. The resulting water insoluble HEMA/AEMA - HPTS dye-copolymer may then be purified according to the method of the invention, to remove unreacted HPTS, unreacted monomer, and very small polymer chains.

The polymer-dye reaction mass containing unreacted dye, unreacted monomers, and small oligomer-dye chains is preferably placed within a container having a semi-permeable membrane, such as regenerated cellulose, permeable to molecules having a molecular weight less than about 12,000 to 14,000. The membrane is thus preferably impermeable to the polymer-dye compound, but permeable to a solvent such as dimethylformamide (DMF), methanol, or other similar organic solvents in which the polymer-dye and unbound indicator dye material are soluble, and permeable to the unbound indicator material and unreacted monomers, and oligomer-dye fragments. The membrane may be advantageously formed as a dialysis bag in which the polymer-dye compound may be conveniently placed. The exposure of the polymer-dye contained within the semi-permeable membrane to the solvent thus draws the unbound indicator material into the filtrate solution outside the container through the membrane to filter the unwanted indicator material from the polymer-dye. The dialysis bag containing the reaction mixture is preferably placed in a container having a volume of the organic solvent wash approximately 10 times the volume of the polymeric reaction mass. The filtrate is separated from the dialysis bag, and the solvent is preferably changed three or four times for maximum purification, with preferably at least 12 hours between solvent changes. Other types of containers may also be used, such as a container having the membrane placed across a portion of the container to act as a semi-permeable barrier, to allow solvent and smaller unwanted molecules in the polymer-dye to diffuse out of the polymer-dye and through the membrane into the solvent.

The amount or concentration of the unbound indicator material in the filtrate may also be monitored over time, and the polymer-dye contained within the semi-permeable membrane may be repeatedly exposed to fresh solvent after removal of the filtrate until the concentration of the unbound indicator material in the filtrate reaches an acceptable level, such as less than a predetermined threshold concentration of approximately one micromolar. It has been found that the dialysate filtrate solutions yield decreasing dye concentrations over subsequent solvent changes, demonstrating the effectiveness of the method of purification. Tests of the performance of an optical pH sensor incorporating a polymer-dye compound purified according to the method of the invention have provided highly reliable pH measurements with a drift of only 0.008 pH units over a 60 hour test period.

It can thus be appreciated that the purification method of the invention will permit the manufacture of essentially drift free pH sensors, and that the principles of the method may be applied in purifying polymer-dye compounds for a wide variety of uses. The drift-free performance of such sensors facilitates the transportability of the sensors as well, in that such sensors can be sufficiently stabilized so as to not require post fabrication treatment to attain drift free operation.

It will be apparent from the foregoing that while particular forms of the invention have been illustrated and described, various modifications can be made without departing from the scope of the invention. Accordingly, it is not intended that the invention be limited, except as by the appended claims.

## Claims

1. A method for purifying a polymer containing a covalently bound dye indicator material and unbound dye indicator material to reduce drift in a chemical sensor incorporating said polymer and bound dye indicator material, comprising the steps of:
a) placing a polymer-dye reaction mass formed by covalently bonding a polymer with a dye indicator material and containing unbound dye indicator material therein within a container formed from a semi-permeable membrane impermeable to said polymer-dye reaction mass but permeable to said unbound indicator material and permeable to a solvent in which said unbound indicator dye material is soluble;
b) placing said polymer-dye mass in said container in a volume of said solvent to draw said unbound indicator material into solution in said solvent through said membrane to form a filtrate fraction of said solvent; and
c) separating said filtrate fraction from said polymer-dye reaction mass in said container.

2. A method as claimed in claim 1, further including the step of measuring the concentration of said unbound indicator material in said filtrate fraction, and repeating steps b) and c) until the concentration of said unbound indicator material in said filtrate is less than a predetermined threshold.

3. A method as claimed in claim 1 or claim 2 wherein said polymer is formed from a mixture of a copolymer of hydroxyethyl methamethacrylate and aziridynyl ethyl methamethacrylate and a polyether polyisocyanate crosslinking agent.

4. A method as claimed in any one of the preceding claims wherein said dye indicator material comprises 8-hydroxy-1, 3, 6 pyrenetrisulfonic acid.

5. A method as claimed in any one of the preceding claims wherein said membrane is permeable to molecules having a molecular weight less than about 14,000.

6. A method as claimed in claim 5 wherein said membrane is permeable to molecules having a molecular weight less than about 12,000.

7. A method as claimed in any one of the preceding claims wherein said membrane comprises regenerated cellulose.

8. A method as claimed in any one of the preceding claims wherein said solvent is an organic solvent.

9. A method as claimed in claim 8 wherein said solvent is selected from dimethylformamide and methanol.

10. A method as claimed in any one of the preceding claims wherein said volume of said solvent is approximately 10 times the volume of said polymer-dye reaction mass.

11. Use in a blood constituent sensor of a polymer containing a covalently bound dye indicator when purified by a method as claimed in any one of the preceding claims.
